Europäisches Patentamt

European Patent Office

Office européen des brevets

(19)

(11) Publication number: **0 371 756**
**A2**

(12) **EUROPEAN PATENT APPLICATION**

(21) Application number: **89312351.3**

(51) Int. Cl.5: **B60C 11/11, B60C 9/20**

(22) Date of filing: **28.11.89**

(30) Priority: **30.11.88 JP 302989/88**

(43) Date of publication of application:
**06.06.90 Bulletin 90/23**

(84) Designated Contracting States:
**DE FR GB**

(71) Applicant: **SUMITOMO RUBBER INDUSTRIES LIMITED**
**1-1 Tsutsuicho 1-chome Chuo-ku**
**Kobe-shi Hyogo-ken(JP)**

(72) Inventor: **Kajiwara, Shinzo**
**8-6 Maikodai 5-chome Tarumi-ku**
**Kobe-shi Hyogo-ken(JP)**
Inventor: **Konii, Yoshio**
**5-17 Kariguchi-dai 6-chome Tarumi-ku**
**Kobe-shi Hyogo-ken(JP)**
Inventor: **Yanase, Minao**
**8-1 Gakuen Nishimach 5-chome Nishi-ku**
**Kobe-shi Hyogo-ken(JP)**

(74) Representative: **Stewart, Charles Geoffrey**
**SP TYRES UK LIMITED Tyre Technical Division**
**Fort Dunlop Erdington Birmingham B24 9QT(GB)**

(54) **A pneumatic radial tyre.**

(57) A pneumatic radial tyre (1) comprising a carcass (6) extending from a tread (2) through side-walls (3) and wrapped around a bead core (5) in each of two beads (4) and a belt (2) composed of at least two belt plies (7A,7B) of steel belt cords inclined with respect to the tyre equator (CO) and superimposed on the carcass (6), wherein the tread part is provided with at least two longitudinal grooves continuously extending toward the tyre equator direction characterised by lateral grooves (GS) arranged apart at intervals around the tyre equator direction which grooves are inclined at an angle of 5 degrees or less with respect to the direction of the tyre axis and of which at least one end is opened at the longitudinal grooves (G1,G2) or a tread edge (a).

FIG.2

EP 0 371 756 A2

# A PNEUMATIC RADIAL TYRE

This invention relates to a radial tyre, and more particularly to a pneumatic radial tyre for passenger cars.

Radial tyres are widely used and provide high levels of steering stability and ride comfort. However often side drift of a car to one side occurs caused by so-called conicity where the right and left sides of the tread in the axial direction form a cone shape due to different peripheral lengths of the belt layers. Various steps have been taken in order to improve the homogeneity to the right and left sides of the tyre axis to avoid this.

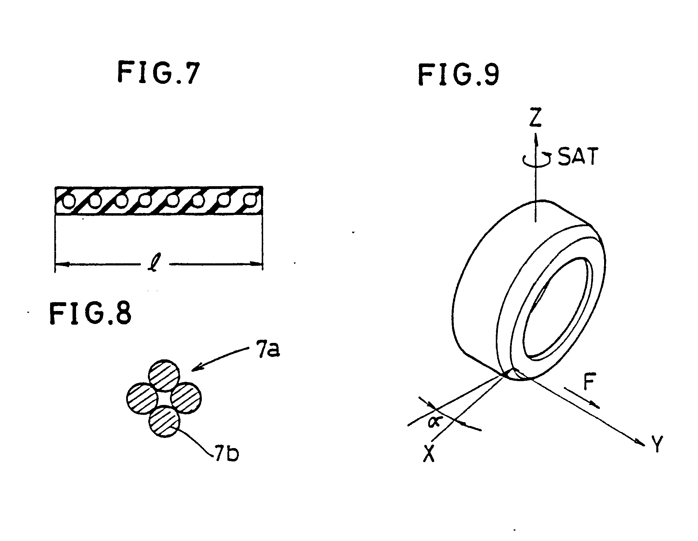

On the other hand, following recent progress in tyre measurement technologies, as shown schematically in Figure 9, the cornering force, i.e. the lateral force F, which is generated in the lateral direction Y of a tyre when a tiny slip angle Alpha is applied in the running direction of the tyre and the self-aligning torque SAT which acts in the direction of the slip angle Alpha about the vertical axis Z that passes the centre of a tyre can be measured at a high precision.

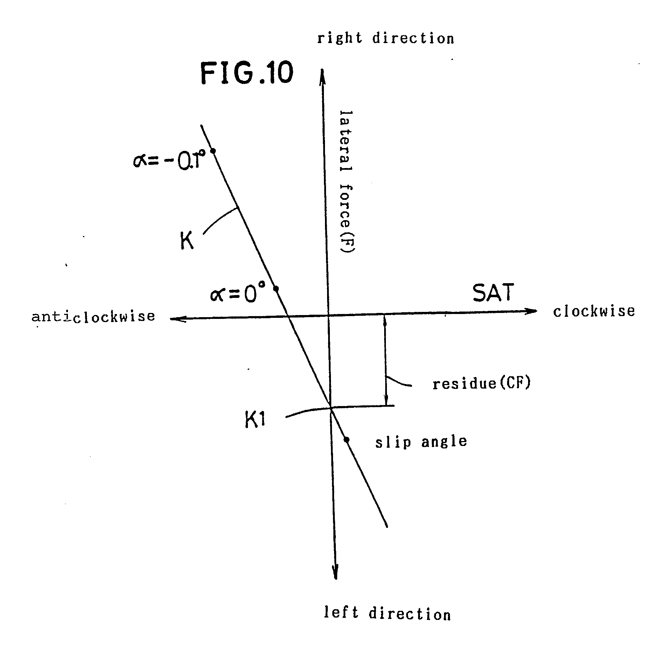

Such measurement results can be expressed, as shown in Figure 10, by plotting the self-aligning torque SAT along the axis of abscissas and the lateral force F on the axis of ordinates to give curve K. In the curve K, the cases when the slip angle Alpha is 0 degree, +0.1 degree or -0.1 degree are shown by large dots.

This relation of the self-aligning torque SAT to the lateral force F shows the lateral force F at the crossing point K1 of the curve K and the axis of ordinates, that is, the lateral force F when self-aligning torque SAT is not generated, is called the residue CF. It was found that the residue CF is a tyre characteristic which affects the one-side drift of a car. In other words, a car drifts to one side in the right direction when the residue CF is in the plus direction, i.e. the right direction, and is a minus for drift the other way. It is required that the one-side drifting characteristic of a car can be evaluated by the direction of the residue CF and its size, and the residue CF has to be reduced in order to prevent the one-side drifting of a car.

The residue CF is generated from the expansion of the belt in the ground contact part, and it is considered that a shear strain in a surface is created in the belt of a radial tyre. This strain is located in the belt plies which comprise parallel cords crossing the cords between the plies which causes movement of the trellis type under belt expansion. The tyre tread provides steering torque by a shearing strain in a surface created together with the strain of the belt ply in the outermost layer, and the lateral force F is created by this steering torque. Thus, it was found that the residue CF is caused by the belt and depends on the "value" of the cords of the belt and the inclination of the belt cords.

The "value" of the cords is the cord belt drive product N x S, which is the product of the total sectional area S(square mm) of one belt cord and the number N of belt cords in a 10 cm strip counted in a right-angled direction of the belt cords. It is known that the one-side drifting of a car can be controlled by reducing the cord belt drive product N x S and enlarging the inclination angle of the cords with respect to the tyre equator. This reduces the rigidity of the belt, and thus reduces the hoop effect which in turn reduces the residue CF.

Such reduction of the rigidity of the belt improves the ride comfort performance at the same time, which is a basic item required for a car.

However, although the residue CF can be reduced somewhat by reducing the rigidity of the belt, it was found that when an inappropriate tread pattern is chosen, the residue CF is instead increased, and thus, the choice of tread patterns that match the breaker rigidity is indispensable to improve the straightforward driving stability.

In addition, in order to increase the product appeal of a tyre, the aesthetic sense of customers to a tyre has also to be taken importantly into consideration.

It is hence a primary object of the invention to provide a pneumatic radial tyre that can improve the ride comfort performance as well as the straightforward driving performance by reducing the residue CF.

Moreover, it is a primary object of the invention to provide a pneumatic radial tyre that has improved appearance in addition to the above.

According to one aspect of the present invention a pneumatic radial tyre comprises a carcass extending from a tread through side-walls and wrapped around a bead core in each of two beads and a belt composed of at least two belt plies of steel belt cords inclined with respect to the tyre equator (CO) and superimposed on the carcass, wherein the tread part is provided with at least two longitudinal grooves continuously extending toward the tyre equator direction characterised by lateral grooves (GS) arranged apart at intervals around the tyre equator direction which grooves are inclined at an angle of 5 degrees or less with respect to the direction of the tyre axis and of which at least one end is opened at the longitudinal grooves (G1,G2) or a tread edge (a).

In these tyres, it is preferable that the belt cord drive product N x S, which is the product of the total sectional area S(square mm) of one belt cord and the number N of the belt cords provided in a distance of 10 cm in a direction at right-angles to the belt cords is smaller than 15.0, and the inclination angle of the belt cords to the tyre equator is 21 degrees or more.

By setting the inclination angle of each lateral groove with respect to the tyre axis direction at 5 degrees or less, the residue CF can be reduced.

Moreover, within this range, the direction of the inclination of the lateral grooves to the tyre axis direction can be chosen at will to be ascending or descending to the right, regardless of the direction of the belt cords of the belt ply in the outermost layer.

If the inclination angle exceeds 5 degrees, the residue CF tends to be increased by the lateral grooves, and in the case it exceeds 15 degrees, the residue CF is remarkably increased, thus causing one-side drifting on a car.

In order to increase the product appeal and marketability of a tyre, the tread pattern must follow the aesthetic sense of customers, so that it is important to add a powerfulness or image strength to lateral grooves. However, the lateral grooves of the invention mainly extend in the direction of the tyre axis considered to lack the powerfulness. Therefore, in order to increase the powerfulness, the inclination should be larger, but on the other hand, a larger inclination accompanies an increase of residue CF. Therefore, it is required to meet these contradictory requirements.

A tread pattern that has a powerful image as well as reduced residue CF is obtained by constructing outside lateral grooves with the main parts inclined at 5 degrees to 45 degrees to the tyre axis direction in the outer area S. In a tread divided in the tyre axis direction approximately into four equal areas which are left inside area CL, right inside area CR (combined and called the inside area C), left outside area SL and right outside area SR (combined and called an outside area S), the inside lateral grooves are inclined in the same direction as the outside lateral grooves and with the main part inclined at 5 degrees to 45 degrees in an inside area C, and setting the difference of inclination angles between the inside and outside lateral grooves at 5 degrees or less.

This is because in the inside area C and the outside area S, the characteristics for the residue CF are reverse, and thus, by using inside and outside lateral grooves that incline all in the same direction and at approximately the same angle, the residue CF can be improved.

Together with this, by setting the belt cord drive product N x S at 15.0 or less and the inclination of the belt cords at 21 degrees or more, it is possible to reduce the belt rigidity and improve the ride comfort.

In such a tread part where the belt rigidity is relatively small, it is known that the smaller the inclination angle of the lateral grooves to the direction of the tyre axis is, the more the residue CF is reduced.

An embodiment of the present invention will now be described by way of example, referring to the attached drawings, in which:

Figure 1 is a sectional view showing an embodiment of the invention;

Figure 2 is a plan view showing the tread pattern of the tyre in Figure 1;

Figure 3 is a plan view showing another tread pattern;

Figure 4 is a plan view showing a second embodiment of a tread pattern;

Figures 5 and 6 are plan views showing other patterns respectively;

Figure 7 is a sectional view of a belt ply;

Figure 8 is a sectional view showing an example of a belt cord;

Figure 9 is a perspective view explaining the residue CF;

Figure 10 is a graph showing the residue; and

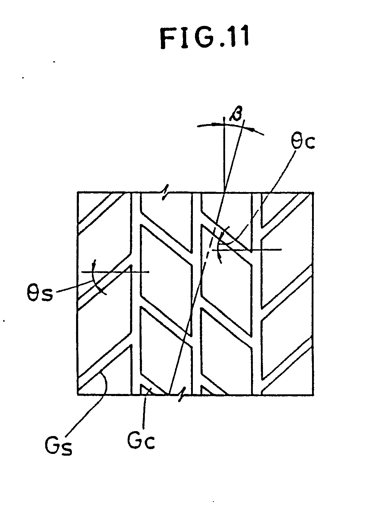

Figure 11 is a plan view showing a pattern of a prior art comparison example.

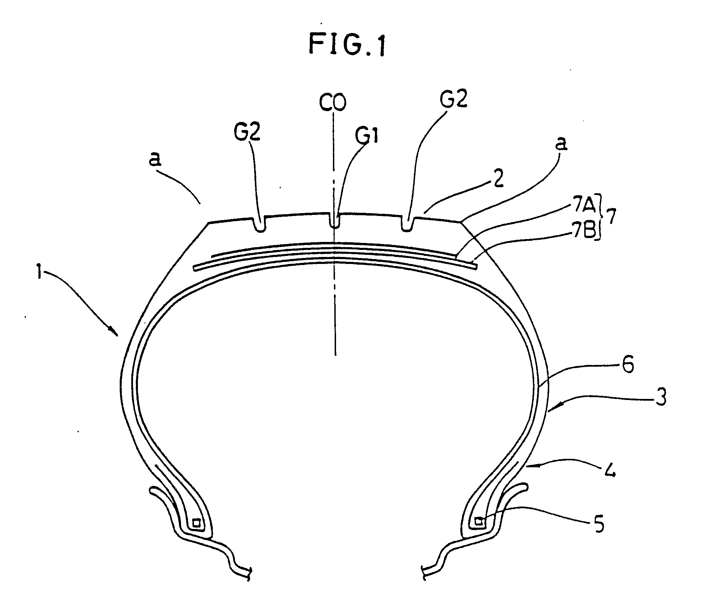

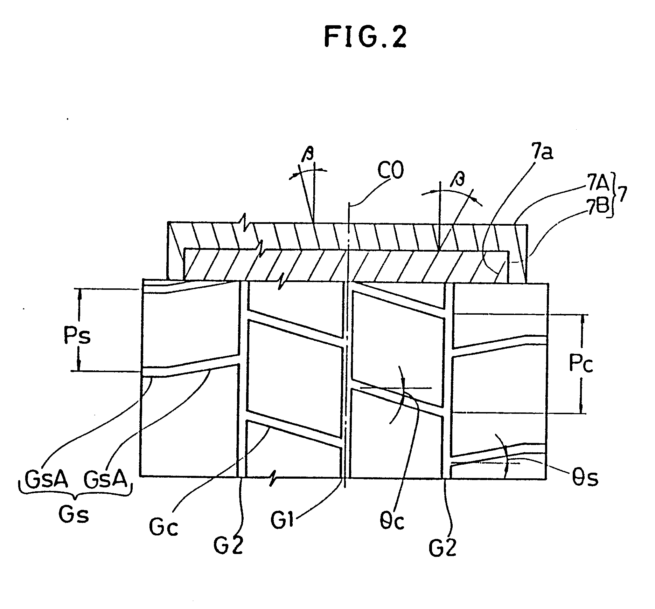

In Figures 1 and 2, a pneumatic radial tyre 1 comprises a carcass 6 which extends from a tread 2 through a side-wall 3 and is wrapped around a bead core 5 of a bead 4, and a belt 7 which is disposed outside in the radial direction of the carcass 6 and inside the tread part 2.

The belt 7 comprises two inside and outside layers of belt plies 7A and 7B each having belt cords inclined at an angle Beta of 21 degrees or more with respect to the tyre equator CO. Also, belt cords in the outside belt ply 7A and belt cords in the inside belt ply 7B are inclined in opposite directions to each other with respect to the tyre equator CO.

In this embodiment, the outermost side, an outer belt cord 7a which is a belt cord in the outside belt ply 7B inclines in the right upward direction to the tyre equator CO in Figure 2. For the belt cords, as shown for example in Figure 8, stranded steel wire 7b of 2 + 7 x 0.22, 1 x 5 x 0.23, or 1 x 4 x 0.22, for example, is used, and by setting the belt cord drive product N x S, which is the product of the total sectional area S (square mm) of one cord, that is the total sum of sectional areas of the wire 7b, and the number N of cords

3

in a distance 1 of 10 cm in Figure 7, at 15.0 or less, the rigidity of the belt 7 is reduced and the ride comfort improved.

In Figure 2 the tread 2 comprises four lines of lateral grooves, inside lateral grooves Gc arranged on both sides of the tyre equator CO and outside lateral grooves Gs arranged outside the lateral grooves Gc and of which the outer ends extend to the tread edge (a). The grooves are each aligned with distances of circumferential pitches Pc and Ps in the direction of the tyre equator. The lateral grooves Gs and Gc are divided into sections by longitudinal grooves Ga,Ga,G2 extending in the circumferential direction on the tyre equator CO and on the middle regions between the tyre equator CO and tread edge (a). Both ends of the inside lateral groove Gc open into the longitudinal grooves G1 and G2, and the inner end and the outer end of the outside lateral grooves Gs open into the longitudinal groove G2 and the end edge (a) of the tread part 1, respectively.

The entire length of the inside lateral groove Gc is inclined at an angle Theta c = 5 degrees or less to the right side in the Figure. The outside lateral groove Gs comprises a main part GsA exceeding 70% of the entire length which inclines at an angle Theta s of 5 degrees or less elevating to the right and a sub-part GsB which opens at the tread end (a) and extends in the tyre axis direction.

Thus, in the case of employing a belt which has a smaller belt rigidity, by setting the inclination angles Theta c and Theta s of the aligned lateral grooves Gc and Gs at 5 degrees or a smaller angle, as mentioned above, the residue CF can then be reduced regardless of the direction of inclinations.

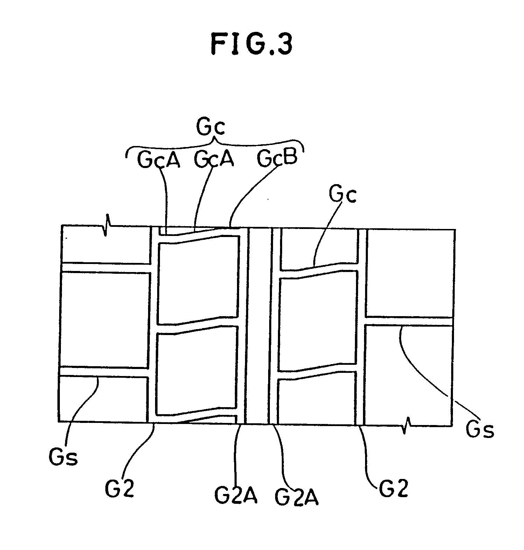

Figure 3 shows a case in which the longitudinal grooves G2A and G2A on both sides of the tyre equator CO and the longitudinal grooves G2 and G2 are constructed together with an inside lateral groove Gc between the longitudinal grooves G2A and G2, wherein the inside lateral groove Gc is zigzag shaped, comprising a main part GcA and sub-parts GcB and GcB extending in the tyre axis direction and arranged at both ends of the main part GcA.

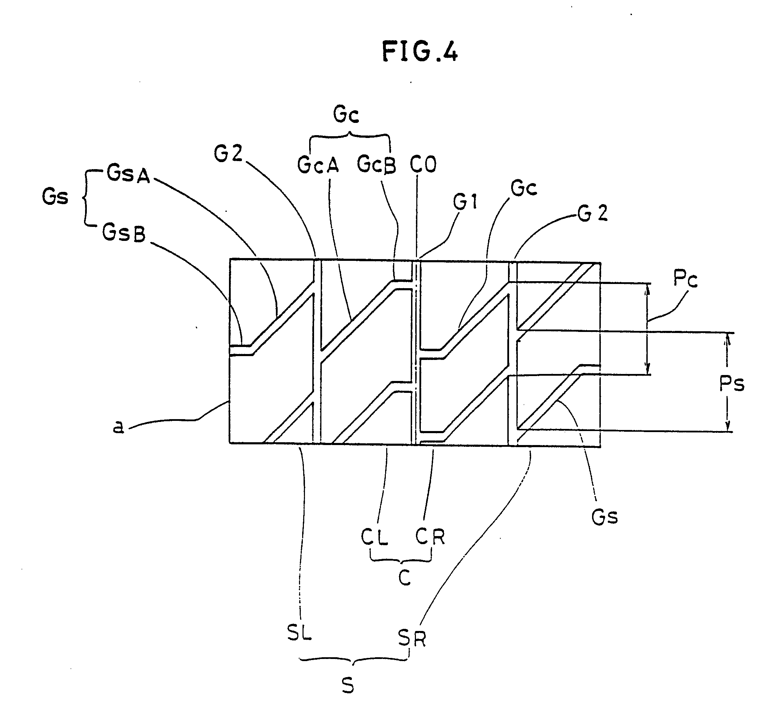

In Figure 4 which shows a second embodiment in which a tread part 2 is divided in the tyre axis direction, virtually, into a left inside area CL and a right inside area CR of both sides of the tyre equator CO, a left outside area SL and a right outside area SR which extend from the inside areas CL, CR to the tread end (a), wherein in each right and left outside area S, outside lateral groove Gs ... are separately constructed in the tyre equator direction of which main part GsA exceeds 70% of the entire length of the outside area S in the tyre axis direction and inclines at an inclination angle Theta s of 45 degrees or less with respect to the tyre axis direction. In each right and left inside area C, inside lateral grooves Gc are constructed of which the main part GcA exceeds 70% of the entire length of the inside area C in the tyre axis direction and inclines at an inclination angle Theta c of 45 degrees or less with respect to the tyre axis direction elevating upward to the left as well as the outside lateral grooves Gs. In the main parts GsA and GcA, sub-parts GsB and GcB are constructed which extend in the tyre axis direction, and the difference between the inclination angles Thetc c and Theta s, i.e. |Theta c - Theta s|, is set at 5 degrees or less. If the inclination angle Theta s of the outside lateral groove Gs exceeds 45 degrees, a pattern noise tends to be produced, and if the inclination angle Theta c of the inside lateral groove Gc exceeds 45 degrees, the cornering force upon turning tends to be decreased and the tyre lacks controlling stability, and therefore the angles should be set within the range. In the embodiment, longitudinal grooves G1 and G2 extending in the direction of the tyre equator on the tyre equator CO and the middle region between the tyre equator CO and the tread end (a) are constructed so as to divide the tread part 2 into the right and left inside area C and the right and left outside area S. The longitudinal groove G (generally called G) may be a linear groove or a zigzag groove.

The circumference pitches Ps and Pc which are the intervals of the outside and inside grooves Gs and Gc in the tyre equator direction are both set at 40 mm or less, preferably 20 mm or less.

By constructing the lateral grooves in the right and left outside area S and the left and right inside area C at an inclination between 5 and 45 degrees with respect to the tyre axis direction in the same direction and setting the difference of the angle at 5 degrees or less, the residue CF can be improved. In addition, by setting the circumference pitches Pc and Ps preferably at 20 mm or less the residue CF can be further reduced.

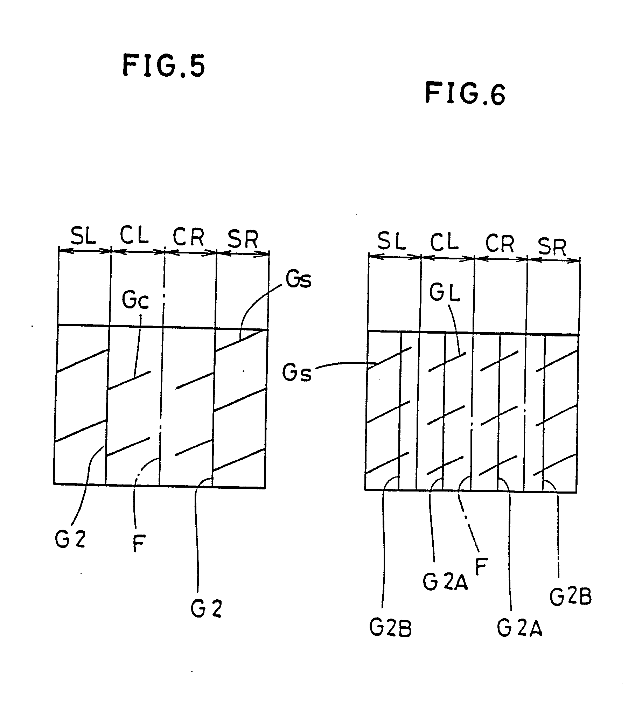

While Figure 4 shows a case in which longitudinal grooves G1 and G2 are constructed respectively in the parts that section the inside area C and the outside area S, if two longitudinal grooves G2 and G2 are applied, as shown in Figure 5, or in the case four longitudinal grooves G2A and G2B applied at a regular intervals, as shown in Figure 6; the inside area C and the outside area S are sectioned by a virtual line F on the rib separated from the longitudinal groove G, and at least one end of the inside lateral groove Gc must open at the longitudinal groove G and at least one end of the outside lateral groove Gs open at the tread end (a) or the longitudinal groove G.

Detailed examples were made to prove the invention as prototype tyres having a tyre size of

4

175/70R13. They were produced according to the specifications shown in Figures 2 and 3 and Table 1, and the ride comfort and the residue CF were measured. As belt cords, steel cords of 1 x 4 x 0.22 in size were used. The belt was composed of two plies. The results are summed up in Table 1. The test was performed by mounting on a rib 5J x 13, setting the internal pressure and loading at 2.0 kg/square cm and 300 kg, respectively, and using a flat track tyre test machine made by MTS Co., U S A, and the residue CF was measured. In the Table, the residue CF is shown by a residue CF index setting the index of comparison 1 at 100, which means that the smaller the index is, the smaller the residue CF is, that is more preferable. In regard to the ride comfort, by mounting the tyre on a 2000 cc passenger car, a feel test was conducted by a driver, and the evaluation was made by setting the comparison 1 at 100 points. Higher scores show better ride comfort.

On both aspects, the embodiment was superior to the comparison example.

Further prototype tyres having the specifications shown in Figure 4 and Table 2 were produced, and the results of the same test as in the example 1 are shown in Table 2. This embodiment was superior in all respects.

As mentioned above, the invention can then improve the ride comfort as well as the one-side drifting performance of a car.

Table 1

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Pattern | Fig. 2 | Fig. 2 | Fig. 3 | Fig. 3 | Fig. 2 | Fig. 2 | Fig. 3 | Fig. 3 | Fig. 2 | Fig. 3 |
| **Belt cord** | | | | | | | | | | |
| $N \times S$ | 12.2 | 12.2 | 14.5 | 14.5 | 15.4 | 15.4 | 20.5 | 20.5 | 12.2 | 14.5 |
| Inclination angle | 21 | 25 | 21 | 25 | 21 | 18 | 21 | 18 | 21 | 21 |
| **Inside lateral angle** | | | | | | | | | | |
| Inclination angle $\theta c$ | 2.5 | 2.5 | 4 | 4 | 2.5 | 2.5 | 2.5 | 2.5 | 15 | 5 |
| Direction | Right downwawd | Right downwawd | Right downwawd | Right downwawd | Right downwawd | Right downwawd | Right downwawd | Right downwawd | Right downwawd | Right downwawd |
| Circumferential pitch Pc (mm) | 18 | 18 | 18 | 18 | 18 | 18 | 18 | 18 | 18 | 18 |
| Length of main groove part(%) | 100 | 100 | 100 | 100 | 100 | 100 | 100 | 100 | 100 | 100 |
| **Outside lateral grooves** | | | | | | | | | | |
| Inclination angle $\theta s$ | 4 | 4 | 0 | 0 | 4 | 4 | 4 | 4 | 10 | 10 |
| Direction | Right upward | Right upward | Horizontal | Horizontal | Right upward | Right upward | Right upward | Right upward | Right upward | Right upward |
| Circumferential pitch Ps(mm) | 18 | 18 | 18 | 15 | 18 | 18 | 18 | 18 | 18 | 18 |
| Length of main groove part(%) | 85 | 85 | 100 | 100 | 85 | 85 | 85 | 85 | 85 | 85 |
| Riding comfort | 116 | 119 | 112 | 115 | 109 | 106 | 103 | 101 | 114 | 111 |
| Residue CF index | 19 | 18 | 22 | 21 | 26 | 38 | 31 | 47 | 44 | 53 |

Table 2

| | | Example 11 | Example 12 | Example 13 | Example 14 | Example 15 | Example 16 | Comparison1 | Comparison2 | Comparison3 |
|---|---|---|---|---|---|---|---|---|---|---|
| Pattern | | Fig. 4 | Fig. 4 | Fig. 4 | Fig. 4 | Fig. 4 | Fig. 4 | Fig. 11 | Fig. 4 | Fig. 4 |
| Belt cord | N×S | 12.2 | 12.2 | 14.5 | 14.5 | 15.4 | 20.5 | 20.5 | 15.4 | 20.5 |
| | Inclination angle | 21 | 21 | 25 | 25 | 18 | 18 | 16 | 21 | 21 |
| Inside lateral angle | | | | | | | | | | |
| Inclination angle θc | | 45 | 25 | 45 | 25 | 45 | 40 | 30 | 30 | 30 |
| Direction | | Right upward | Right upward | Right upward | Right upward | Right upward | Right upward | Right upward | Right upward | Right upward |
| Circumferential pitch Pc(mm) | | 18 | 18 | 18 | 18 | 18 | 12 | 12 | 12 | 18 |
| Length of main groove part(%) | | 85 | 85 | 85 | 85 | 85 | 85 | 85 | 85 | 85 |
| Outside lateral grooves | | | | | | | | | | |
| Inclination angle θs | | 45 | 30 | 45 | 30 | 45 | 45 | 30 | 45 | 45 |
| Direction | | Right upward | Right upward | Horizontal | Horizontal | Right upward | Right upward | Right upward | Right upward | Right upward |
| Circumferential pitch Ps(mm) | | 15 | 15 | 15 | 15 | 15 | 15 | 18 | 15 | 15 |
| Length of main groove part(%) | | 85 | 85 | 85 | 85 | 85 | 85 | 100 | 85 | 85 |
| Riding comfort | | 107 | 107 | 103 | 103 | 101 | 101 | 100 | 100 | 95 |
| Residue CF index | | 62 | 76 | 31 | 44 | 96 | 85 | 100 | 100 | 120 |

7

**Claims**

1. A pneumatic radial tyre (1) comprising a carcass (6) extending from a tread (2) through side-walls (3) and wrapped around a bead core (5) in each of two beads (4) and a belt (2) composed of at least two belt plies (7A,7B) of steel belt cords inclined with respect to the tyre equator (CO) and superimposed on the carcass (6), wherein the tread part is provided with at least two longitudinal grooves continuously extending toward the tyre equator direction characterised by lateral grooves (GS) arranged apart at intervals around the tyre equator direction which grooves are inclined at an angle of 5 degrees or less with respect to the direction of the tyre axis and of which at least one end is opened at the longitudinal grooves (G1,G2) or a tread edge (a).

2. A pneumatic radial tyre according to claim 1 characterised in that the belt (7) comprises belt cords inclined at an angle of 21 degrees or more with respect to the tyre equator (CO), and a belt cord drive product (N x S) defined as the product of the total sectional area S (square mm) of one belt cord and number N of driven belt cords in 10 cm in the right angle direction to the belt cords is smaller than 15.0.

3. A pneumatic radial tyre according to claim 1 or claim 2 characterised in that the lateral grooves (TF) comprise a main groove part (GcA) having a length exceeding 70% of the lateral length of the groove inclined at an angle Theta ranging from 5 degrees to 45 degrees with respect to the axial direction and the remainder of the groove being inclined at 5 degrees or less with respect to the axial direction.

4. A pneumatic radial tyre according to claim 1, 2 or 3 characterised in that the tread part is provided with at least two longitudinal grooves (G1,G2) continuously extending parallel to the tyre equator, lateral grooves (Gc) arranged in inside (CL,CR) and outside (SL,SR) areas formed by dividing the tread in the axial direction into approximately four equal areas, a left (CL) and right (CR) inside area at both sides of and adjacent to the tyre equator (CO) and left (SL) and right (SR) outside areas axially outwards of the inside tread areas (CL,CR) and extending to the tread edges (a), each of said inside lateral grooves (Gc) including a main groove part (GcA) which has a length exceeding 70% of the inside tread width in axial direction and inclined at an angle Theta c ranging from 5 degrees to 45 degrees with respect to the axial direction in the same direction, each of the outside lateral grooves (Gs) including a main groove part (GsA) having a length greater than 70% of the outside tread width in the axial direction and inclined at an angle Theta s ranging from 5 degrees to 45 degrees with respect to the axial direction in the same direction as the main groove parts (GcA) of the inside lateral grooves (Gc) and the difference |Theta c - Theta s| between the angle Theta c and the angle Theta s is 5 degrees or less.

FIG.1

# FIG.2

# FIG.3

# FIG.4

EP 0 371 756 A2

# FIG.5

# FIG.6

# FIG.7

$$\ell$$

# FIG.8

7a

7b

# FIG.9

Z

SAT

F

X

Y

α

FIG.10

# FIG.11